# EUROPEAN PATENT SPECIFICATION

(11) **EP 3 001 069 B1**
(45) Date of publication and mention of the grant of the patent: **24.08.2016**
(21) Application number: 15182411.7
(22) Date of filing: 25.08.2015
(51) Int. Cl.: F16H 57/028, F16H 57/03

(54) **TRANSMISSION CASE AND TRANSMISSION EQUIPPED WITH THE SAME**
GETRIEBEGEHÄUSE UND GETRIEBE AUSGESTATTET MIT DEM GLEICHEN
BOÎTIER DE TRANSMISSION ET TRANSMISSION ÉQUIPÉ DU MÊME

(30) Priority: 26.09.2014 JP 2014197293
(43) Date of publication of application: 30.03.2016
(73) Proprietor: Aichi Machine Industry Co., Ltd., Nagoya-shi, Aichi 456-8601 (JP)
(72) Inventor: HADA, Masatoshi, Nagoya-shi, Aichi 456-8601 (JP); OGURI, Yutaka, Nagoya-shi, Aichi 456-8601 (JP); NOJI, Yasuyuki, Nagoya-shi, Aichi 456-8601 (JP); SATO, Motohiko, Nagoya-shi, Aichi 456-8601 (JP); NAKADERA, Hiroyuki, Nagoya-shi, Aichi 456-8601 (JP); NAKAMURA, Kazuhiko, Nagoya-shi, Aichi 456-8601 (JP); MIYASHITA, Takahiro, Nagoya-shi, Aichi 456-8601 (JP)
(74) Representative: Global IP Europe Patentanwaltskanzlei

(56) References cited:
- DE-A1-102008 009 573
- GB-A- 2 501 722
- US-A- 1 782 912
- US-A1- 2002 017 159

## Description

### Field of the Invention

The present invention relates to a transmission case having a case body and a housing body integrated with the case body, and having a longitudinal direction along an arrangement direction of the case body and the housing body.

### Background

Japanese Patent No. 3575937 describes a configuration provided with a plurality of reinforcing ribs along a longitudinal direction of a transmission case at inner and outer circumferential faces of the transmission case, which is formed as a cylinder.

This transmission case produces an effective increase in surface area via the reinforcing ribs, and is thus able to improve the strength of the transmission case while maintaining a light weight.

However, the above-described transmission case discloses nothing about how to arrange the reinforcing ribs on the inner and outer circumferential surfaces of the transmission case.

In consideration of the above, an object of the present invention is to further improve the strength of the transmission case which has reinforcing ribs on the inner and outer circumferential surfaces thereof.

The closest prior art US 1 782 912 discloses a gear case for a heavy duty omnibus and a method of designing housing walls for machinery, which consists in ascertaining the tone most readily transmitted by such walls, ascertaining the energy transmitted to such walls under the normal operation of such machinery and changing the stiffness of such walls to a point where the tone most readily transmitted requires an amount of energy greater than that available.

### Summary

The transmission case according to the present invention has the features stated in the characterising part of claim 1.

A first aspect of the present invention provides a transmission case having a case body and a housing unit, the housing unit being integrated with the case body and including a transition section connected to the case body, the transmission case having a longitudinal axis along which the case body and the housing unit are arranged, wherein the case body accommodates a transmission mechanism to transmit a drive force from a motor to an output shaft by a variable gear ratio and the housing unit accommodates a coupling mechanism connected to the motor and to transmit the drive force from the motor to the transmission mechanism, a plurality of outer protrusions formed on the outer surface of at least the case body and the transition section to protrude outward, and having a longitudinal dimension along the longitudinal axis of the transmission case; and characterised by a plurality of inner protrusions formed at respective positions on the inner surface of the transmission case to protrude inward, and having a longitudinal dimension along the longitudinal axis of the transmission case, the plurality of inner protrusions being positioned corresponding to at least some of the outer protrusions.

The "motor" above typically corresponds to an internal combustion engine, but suitably also includes an electric engine. The "drive shaft" typically corresponds to an output shaft, but suitably also includes a propeller shaft and a vehicle shaft connected to the output shaft. Also, the "coupling mechanism" typically corresponds to a dry clutch, but suitably also includes a wet clutch, an electromagnetic powder clutch, and a torque converter. Furthermore, the "transition section" typically corresponds to an interface portion between a housing portion and a case body. Here, the "interface portion" is defined as a region having a predetermined width in the longitudinal axis of the transmission case. For example, in a situation where a transmission case is configured such that the housing portion and the case body overlap along the longitudinal axis, then this overlap region is included in the definition.

According to the transmission case above, it is configured that outer protrusions and inner protrusions are each formed on a transition section at the corresponding positions with respect to the circumferential direction of the transmission case. The transition section is the weakest portion of the transmission case. That is, the outer protrusions and the inner protrusions are configured to function as integral protrusions passing through the inside and outside of the transmission case. As such, the strength of the transmission case may be effectively improved in comparison to a configuration where the outer protrusions and the inner protrusions are formed at different positions in the circumferential direction of the transmission case. Furthermore, there is no need to increase the number of protrusions, and thus there is no increase in weight.

A preferred embodiment of the transmission case mentioned above further comprises at least one or a plurality of intersecting protrusions disposed on the outer and/or inner surface of at least the transition section, and each intersecting protrusion intersecting at least one of the plurality of outer protrusions and/or at least one of the plurality of inner protrusions.

According to another preferred embodiment of any one of the transmission cases mentioned above, each intersecting protrusion extends along the circumferential direction of the transmission case to form an annular shape.

According to these preferred embodiments above, it is configured that a plurality of outer protrusions and a plurality of inner protrusions are respectively connected in the circumferential direction of the transmission case by the intersecting protrusions extending across the entire circumferential direction of the transmission case. As such, the outer protrusions, the inner protrusions, and the intersecting protrusion form a frame structure having higher strength in comparison to a conventional configuration where the intersecting protrusions end in the middle of the circumferential direction of the transmission case. Accordingly, a further improvement is achieved in increasing the strength against bending force applied to the transmission case.

According to another preferred embodiment of any one of the transmission cases mentioned above, the case body has an ellipse-like-shaped cross-section perpendicular to the longitudinal axis of the transmission case.

A typical example of the "ellipse-like" shape is an oval shape.

According to another preferred embodiment of any one of the transmission cases mentioned above, the plurality of outer protrusions and/or the plurality of inner protrusions are formed such that the concentration of the number of the plurality of outer protrusions and/or the plurality of inner protrusions per a unit of length along the circumferential direction of the transmission case varies to reinforce the wall of transmission case against bending force applied thereto.

According to another preferred embodiment of any one of the transmission cases mentioned above, the plurality of outer protrusions and/or the plurality of inner protrusions are formed such that the concentration of the number thereof increases from a first point to the second point on a line along the circumferential direction of the transmission case, the first point being a point at which the outer surface of the transmission case intersects with the major axis of the ellipse-like-shaped cross-section, and the second point being a point at which the outer surface of the transmission case intersects with the minor axis of the ellipse-like-shaped cross-section.

It is preferable that the plurality of outer protrusions and/or the plurality of inner protrusions are formed such that the intervals between the plurality of outer protrusions and/or the plurality of inner protrusions vary so as to reinforce the wall of transmission case against bending force applied thereto. It is further preferable that the intervals are adjusted to become narrower from the first point to the second point on a line along the circumferential direction of the transmission case.

According to this embodiment, the wall of the transmission case has lower strength at the second point at which the minor axis intersects with the outer surface than the first point at which the major axis intersects with the outer surface. Accordingly, disposing more outer and/or inner protrusions toward the second point improves strength of the wall of the transmission case while constraining an increase in weight.

According to another preferred embodiment of any one of the transmission cases mentioned above, at least some of the plurality of outer protrusions extend across the entire case body and housing unit with respect to a direction along the longitudinal axis.

According to this embodiment, the strength of the case body and of the housing unit themselves can be effectively improved.

According to another preferred embodiment of any one of the transmission cases mentioned above, all of the plurality of outer protrusions extends across the entire case body and housing unit with respect to a direction along the longitudinal axis.

According to this embodiment, the strength of the case body and of the housing unit themselves can be further effectively improved.

According to another preferred embodiment of any one of the transmission cases mentioned above, wherein each of the plurality of inner protrusions is disposed at the respective positions corresponding to each of the plurality of outer protrusions with respect to the circumferential direction of the transmission case.

According to this embodiment, the outer protrusions and the inner protrusions form a frame structure having a higher level of strength.

According to another preferred embodiment of any one of the transmission cases mentioned above, all of the at least one or more intersecting protrusions intersects with at least one of the plurality of outer protrusions.

According to this aspect, the strength of the case body and of the housing unit can be effectively improved.

According to another preferred embodiment of any one of the transmission cases mentioned above, the at least one or more intersecting protrusions are disposed along a direction of the longitudinal axis.

According to this embodiment, the outer protrusions and the inner protrusions, and the intersecting protrusions form a frame structure having a higher level of strength.

According to another preferred embodiment of any one of the transmission cases mentioned above, the plurality of intersecting protrusions is disposed on the outer and/or inner surface of the transition section and the case body.

According to this embodiment, the strength of the case body themselves can be further improved.

Another preferred embodiment of any one of the transmission cases mentioned above provides a transmission, comprising the transmission case according to any one of the transmission cases mentioned above, an input shaft accommodated in the housing unit; and the output shaft accommodated in the case body and configured to output a drive force input to the input shaft; wherein the transmission mechanism accommodated in the case body configured to transmit the drive force input to the input shaft to the output shaft by a variable gear ratio.

According to this embodiment, the same effects as those provided by the transmission case mentioned above can be achieved. For example, effective improvements for increasing the strength of the transmission case can be achieved.

According to the transmission case above-mentioned, the strength of a transmission case can be improved.

### Brief Description of the Drawings

FIG. 1 is an outside perspective view illustrating an outside view of a transmission according to a preferred embodiment of the present invention.
FIG. 2 is a side view illustrating a side surface of the transmission according to the preferred embodiment of the present invention.
FIG. 3 is a cross-sectional view illustrating a cross-section of the transmission according to the preferred embodiment of the present invention.
FIG. 4 is an outside perspective view illustrating the appearance of a clutch housing unit and a gear case unit.
FIG. 5 is a side view of the clutch housing unit and the gear case unit.
FIG. 6 is a front view of a transmission case according to the preferred embodiment of the present invention.
FIG. 7 is a cross-sectional view illustrating a cross-section taken along line A-A of FIG. 6.
FIG. 8 is a cross-sectional view illustrating a cross-section taken along line B-B of FIG. 5.
FIG. 9 is a cross-sectional view illustrating a cross-section taken along line C-C of FIG. 5.
FIG. 10 is an explanatory diagram illustrating the input operating on the transmission according to the preferred embodiment of the present invention.
FIG. 11 is an explanatory diagram illustrating bending input operating in a vertical direction of the transmission case according to the preferred embodiment of the present invention.
FIG. 12 is an explanatory diagram illustrating bending input operating in a lateral direction of the transmission case according to the preferred embodiment of the present invention.

### Detailed Description of Preferred Embodiments

Preferred embodiments of the transmission case according to the present invention are described below with reference to an example.

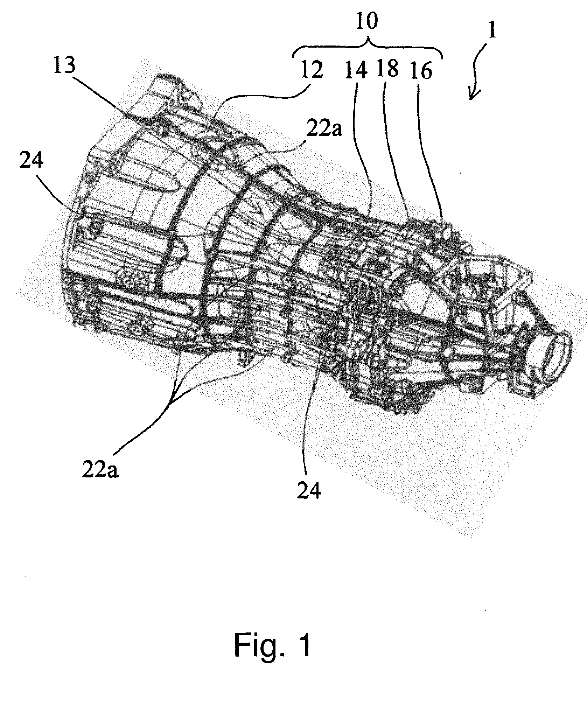

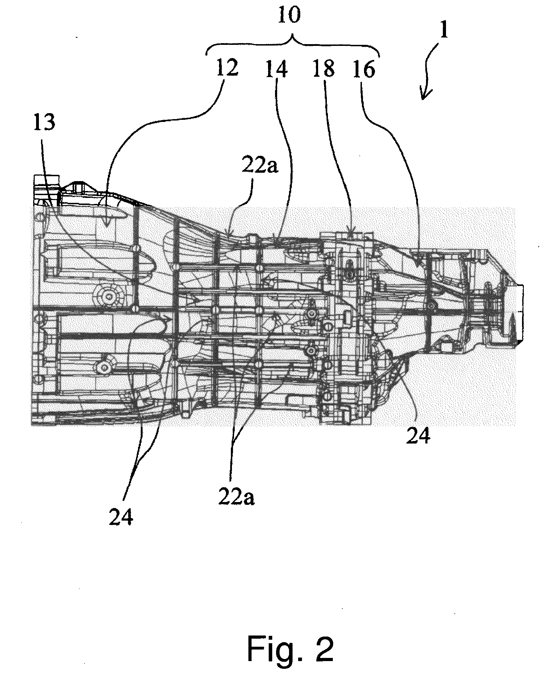

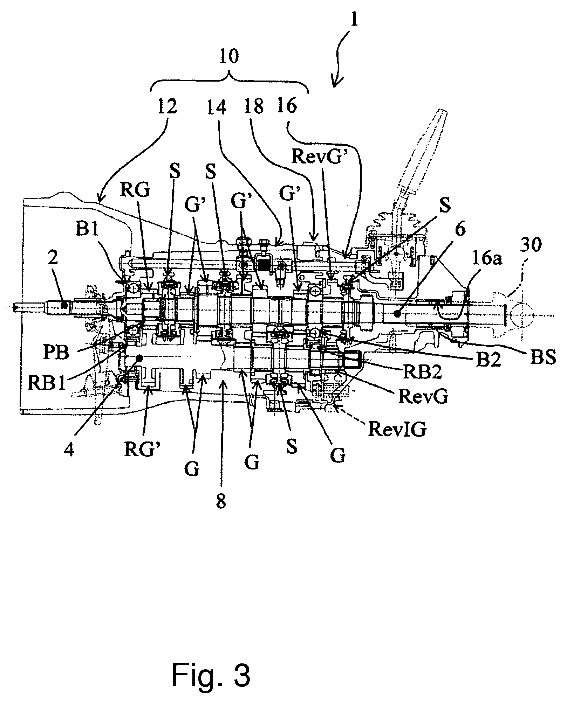

As illustrated in FIG. 1 and FIG. 2, a transmission 1 according to a preferred embodiment of the present invention is configured as a manual transmission for a so called front engine rear drive (hereinafter, FR) type vehicle where the transmission 1 is mounted in a FR vehicle that is disposed with the engine being disposed vertically (in terms of a vehicle longitudinal direction). As depicted in FIG. 3, the transmission 1 includes an input shaft 2, a countershaft 4, an output shaft 6, a transmission mechanism 8 changing a speed of revolution of the input shaft 2 and transmitting the changed speed of revolution to the output shaft 6, and a transmission case 10 containing these components. In the following explanation, the terms "vertical", "lateral", and "longitudinal" are used to refer to the "vertical direction", the "lateral direction", and the "longitudinal direction" in terms of the transmission 1 as mounted in a vehicle. The longitudinal axis is along the longitudinal direction.

As illustrated in FIG. 3, the input shaft 2 is rotatably supported in the transmission case 10 by a ball bearing B1. A not-illustrated clutch is attached to the input shaft 2 at a front end (the left-hand portion in FIG. 3) by spline fitting or the like. The input shaft 2 is configured to take input of a drive force from the engine (not illustrated) via the clutch. A rear end of the input shaft 2 (the opposite side relative to the attachment of the clutch, i.e., the right-hand portion in FIG. 3) is formed to have a hollow interior and also has an outer circumferential surface that is formed integrally with a reduction drive gear RG. In an example of an embodiment, the clutch corresponds to a "coupling mechanism" and the engine corresponds to a "motor".

As illustrated in FIG. 3, the countershaft 4 is rotatably supported at a front end (the left-hand portion in FIG. 3) and a rear end (the right-hand portion in FIG. 3) thereof by roller bearings RB1, RB2 fixed to the transmission case 10. The countershaft 4 is disposed in parallel to the input shaft 2. In addition, the front end of the countershaft 4 (the left-hand portion in FIG. 3) is formed integrally with a reduction driven gear RG' that meshes with the reduction drive gear RG. The drive force input to the input shaft 2 is transmitted to the countershaft 4 via the reduction drive gear RG and the reduction driven gear RG'.

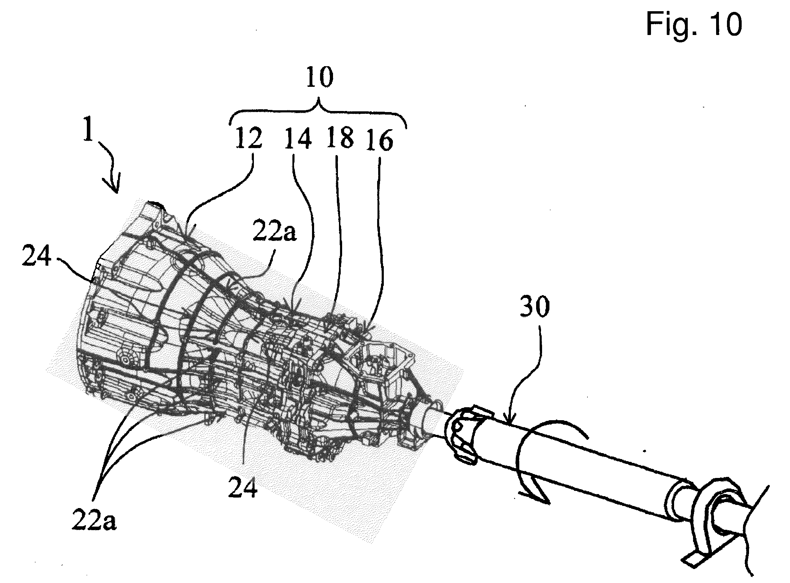

As illustrated in FIG. 3, the output shaft 6 is rotatably supported at one end by a pilot bearing PB disposed in a hollow part of the input shaft 2, and is also rotatably supported at another end by a ball bearing B2 fixed to the transmission case 10. As illustrated in FIG. 3 and FIG. 10, the output shaft 6 spline-fits with a propeller shaft 30.

As illustrated in FIG. 3, the transmission mechanism 8 includes a plurality of drive gears G for use in forward stages and a reverse drive gear RevG, a plurality of driven gears G' for use in the forward stages formed to engage with respective drive gears G, a reverse driven gear RevG' formed to engage with the reverse drive gear RevG via an idler reverse gear RevIG, and a plurality of synchronizers S. The drive force transmitted to the countershaft 4 is output to the output shaft 6 via the transmission mechanism 8.

As illustrated in FIG. 3, the drive gear G is provided on the countershaft 4. The driven gear G' and the reverse driven gear RevG' are provided on the output shaft 6. In addition, the synchronizers S are configured to selectively fix to the countershaft 4 or the output shaft 6, among the drive gears G and the driven gears G', gears mounted on and rotatable relative to the countershaft 4 and the output shaft 6, and the reverse driven gear RevG' mounted on and rotatable relative to the output shaft 6.

As illustrated by FIGS. 1 to 3, the transmission case 10 includes a clutch housing unit 12, a gear case unit 14 formed integrally with the clutch housing unit 12, an extension case unit 16, and an adapter plate 18. In an example of an embodiment, the clutch housing unit 12 corresponds to the "housing unit", and the gear case unit 14 corresponds to the "case body".

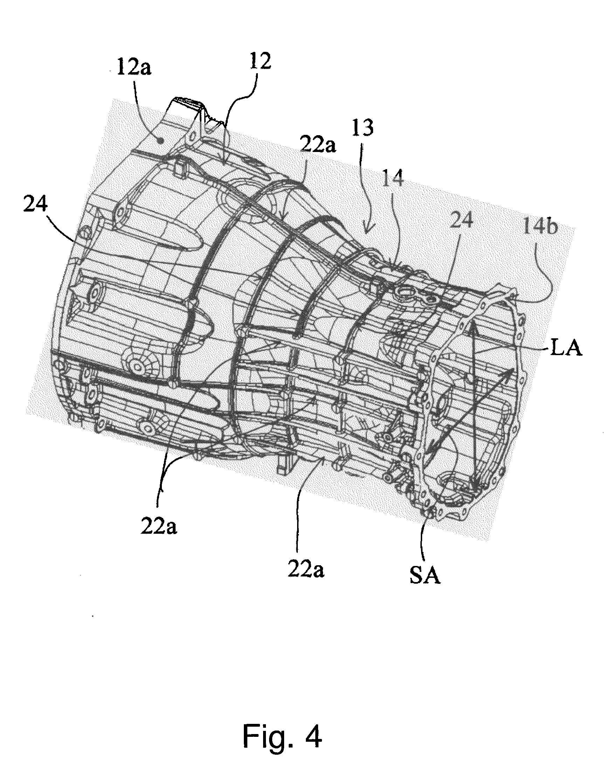

As illustrated in FIGS. 4 to 6, the clutch housing unit 12 includes an attachment flange unit 12a for connecting to the engine (not illustrated). The attachment flange unit 12 is configured to be able to contain the not-illustrated clutch therein. The clutch housing unit 12 is configured in a cylinder shape as a substantially conical frustum, being larger in diameter at a side facing the attachment flange unit 12a than at a side facing the gear case unit 14.

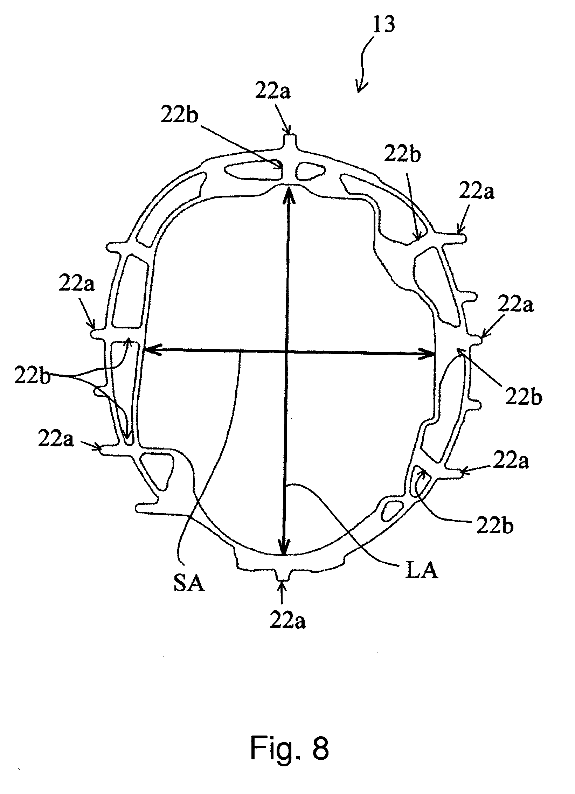

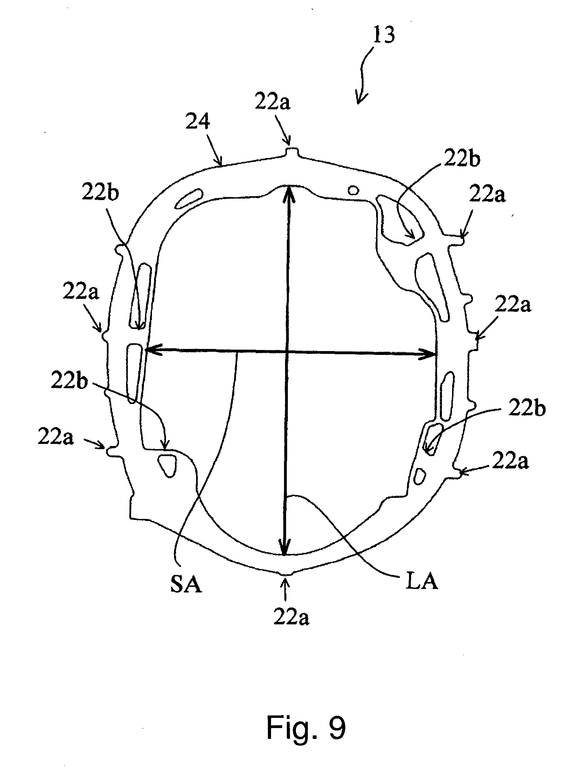

As illustrated in FIG. 4, FIG. 8, and FIG. 9, the gear case unit 14 is configured in a cylinder shape having an ellipse-like-shaped cross-section which is perpendicular to the longitudinal direction. This elliptical shape is configured so that a major axis LA extends in the vertical direction of the transmission case 10 (the vertical direction in FIG. 4, FIG. 8, and FIG. 9) and a minor axis SA extends in the lateral direction of the transmission case 10 (the lateral direction in FIG. 8, and FIG. 9), where the vertical direction is longer.

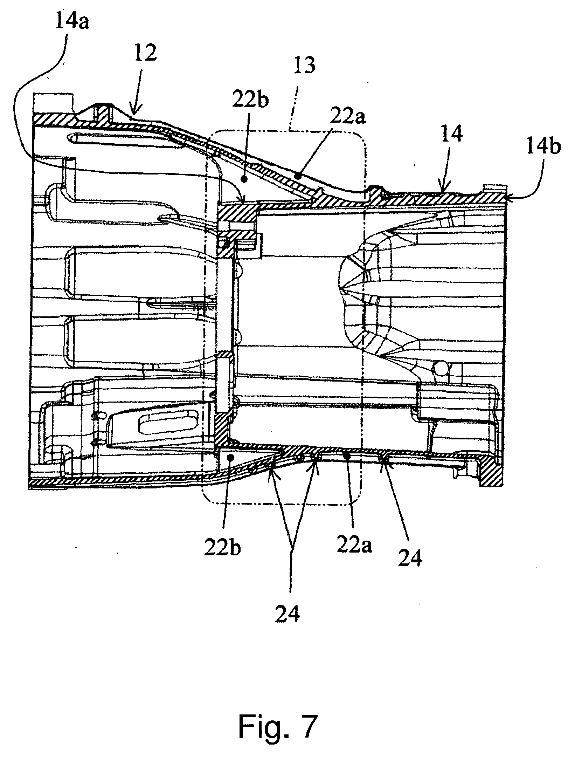

In addition, as illustrated in FIG. 7, the gear case unit 14 has an overlap section 14a overlapping with the clutch housing unit 12 in the longitudinal direction (also described as protruding toward the interior of the clutch housing unit 12). An attachment flange unit 14b for connecting to the adapter plate 18 is formed at an end of the gear case unit 14 opposite the overlap section 14a.

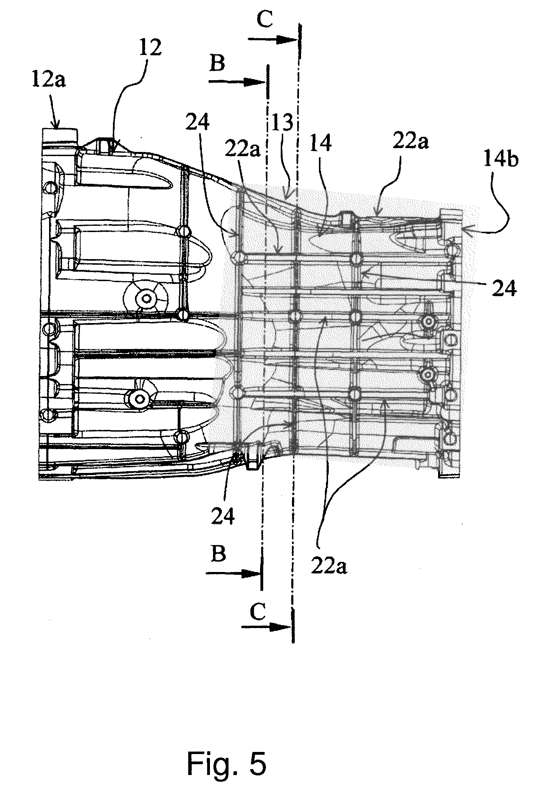

As illustrated in FIG. 4, FIG. 5, and FIG. 7, outer ribs 22a are formed at the outer circumferential surface of the transmission case 10, each protruding outward and extending along the longitudinal direction. As illustrated in FIG. 8 and FIG. 9, the outer ribs 22a are disposed in plurality in the circumferential direction. As illustrated in FIG. 4 and FIG. 5, the plurality of outer ribs 22a are each connected at one end to the clutch housing unit 12, which includes the transition section 13, and are connected at another end to the attachment flange unit 14b of the gear case unit 14.

Also, some of the outer ribs 22a are connected at one end to the attachment flange unit 12a by extending as far as the attachment flange unit 12a of the clutch housing unit 12. Here, the transition section 13 is defined as a transition section from the clutch housing unit 12 to the gear case unit 14, and includes a longitudinal direction region where the overlap unit 14a extends.

Further, as illustrated in FIG. 8 and FIG. 9, the outer ribs 22a are disposed such that a number of the outer ribs 22a disposed at a wall surface formed in a lateral portion of the transmission case 10 is greater than a number of the outer ribs 22a disposed at a wall surface formed in a vertical portion of the transmission case 10. In an example of an embodiment, the outer ribs 22a correspond to the "outer protrusions".

In addition, in an example of an embodiment, an aspect where some of the plurality of outer ribs 22a extend beyond the transition section 13 as far as the attachment flange unit 12a of the clutch housing unit 12 corresponds to an aspect where "at least one of the outer protrusions and inner protrusions extend across the entire longitudinal direction of the case body".

Further, as illustrated in FIG. 4, FIG. 5, FIG. 7, and FIG. 9, a plurality of annular ribs 24 are formed on the outer circumferential surface of the transmission case 10, each protruding outward and extending along the circumferential direction. The annular ribs 24 are disposed in plurality in the longitudinal direction. In the present embodiment, two of the annular ribs 24 are provided on the transition section 13 and one of the annular ribs 24 is provided on the gear case unit 14.

The annular ribs 24 extend across the entire circumferential direction of the transition section 13 and the gear case unit 14, and are configured to connect each of the outer ribs 22a in the circumferential direction. In an example of an embodiment, the annular ribs 24 correspond to the "intersecting protrusions".

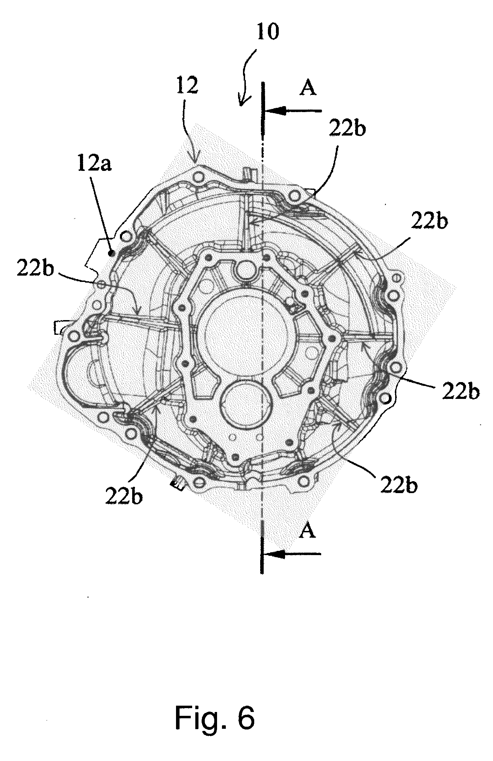

Furthermore, as illustrated in FIG. 6 and FIG. 7, a plurality of inner ribs 22b are formed on the inner circumferential surface of the transition section 13 within the inner circumferential surface of the transmission case 10, each protruding inward and extending radially. As illustrated in FIG. 8 and FIG. 9, the inner ribs 22b are disposed at positions in the circumferential direction, in correspondence with the outer ribs 22a.

In other words, an outer rib 22a and an inner rib 22b are formed to function as an integral rib which passes through the inside and outside of the transmission case 10. Furthermore, the inner ribs 22b are disposed similarly to the outer ribs 22b, such that the number of the inner ribs 22b disposed at the right-and-left side wall surface of the transmission case 10 is greater than the number of the inner ribs 22b disposed at the top-and-bottom side wall surface of the transmission case 10. In an example of an embodiment, the inner ribs 22b correspond to the "inner protrusions".

Another preferred embodiment is that the outer ribs 22a and/or the inner ribs 22b are formed such that the concentration of the number thereof increases along the circumferential direction of the transmission case from a first point to the second point. The first point is a point at which the outer surface of the transmission case 10 intersects with the major axis of the ellipse-like-shaped cross-section. The second point is a point at which the outer surface of the transmission case intersects with the minor axis of the ellipse-like-shaped cross-section.

As illustrated in FIG. 3, the extension case unit 16 has an insertion through hole 16a formed therein. The rear end of the output shaft 6 (the right-hand end portion in FIG. 3) is inserted through the insertion through hole 16a. A bushing BS fits to the insertion through hole 16a. The insertion through hole 16a is configured to support, via the bushing BS, the propeller shaft 30 spline-fitted with the outer circumferential surface of the rear end of the output shaft 6.

The bushing BS is configured to have an inner diameter that is slightly larger than the outer circumferential surface of the propeller shaft 30. As such, the propeller shaft 30 is rotatably and slidably supported in an axial direction.

Next, the input operating on the transmission case 10 in accordance with operations of the transmission 1 are described. The drive force input to the input shaft 2 from the engine (not illustrated) is converted into a drive force by the transmission mechanism 8 in accordance with a predetermined gear ratio, and is transmitted via the output shaft 6 to the propeller shaft 30 (see FIG. 10). Here, a clearance is provided between the propeller shaft 30 and the bushing BS. As such, run-out occurs in the propeller shaft 30 in proportion to this clearance. This run-out occurs in all directions (360°) around the circumference of the propeller shaft 30.

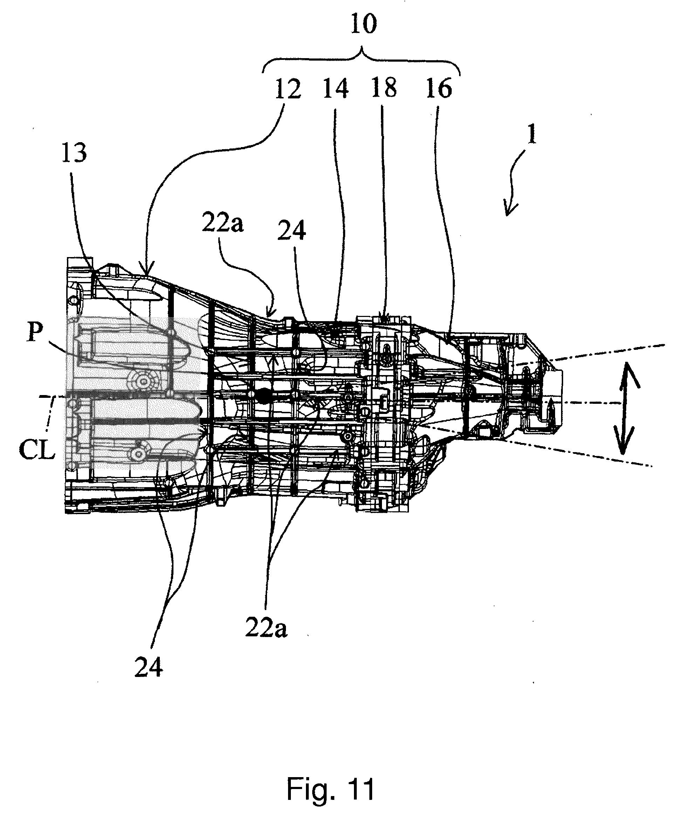

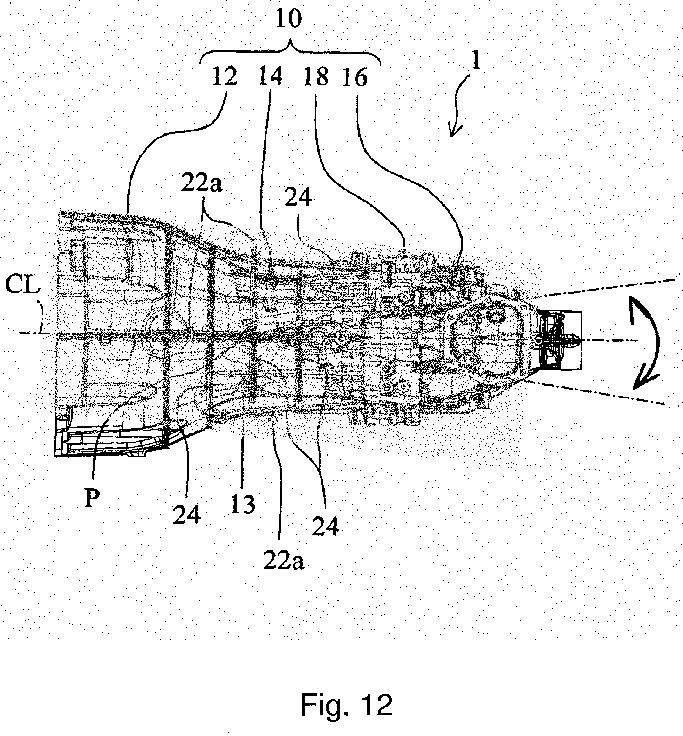

Once the run-out of the propeller shaft 30 occurs, then as illustrated in FIG. 11 and FIG. 12, bending input operates on the transmission case 10 to produce bending deformation originating at the transition section 13. However, the transition section 13 of the transmission case 10 has a plurality of the outer ribs 22a formed on the outer circumferential surface, and also has a plurality of the inner ribs 22b formed on the inner circumferential surface at the positions corresponding to the positions with respect to the circumferential direction at which the outer ribs 22a are disposed. The outer ribs 22a and the inner ribs 22b function as integral ribs each passing through the inside and outside of the transition section 13. This serves to produce an improvement to the strength of the transition section 13 in response to bending input.

Accordingly, the above-described bending deformation originating at the transition section 13 may be easily constrained. Here, the outer ribs 22a are connected to the clutch housing unit 12 and the attachment flange unit 14b, which each have high strength at both ends in the longitudinal direction. As such, the strength of the outer ribs 22a themselves is also high in this configuration.

In addition, the transmission case 10 (especially the transition section 13) is configured with a frame structure having high strength through the outer ribs 22a, the inner ribs 22b, and the annular ribs 24 by having each of the plurality of outer ribs 22a be connected in the circumferential direction by the plurality of the annular ribs 24. As such, this enables a further level of constraint on the bending deformation originating at the transition section 13.

Also, in the transmission case 10 according to the embodiment of the invention, the width in the lateral direction is smaller in comparison to the width in the vertical direction, and as such, the configuration is strict in terms of bending input in the lateral direction. However, the number of the outer ribs 22a and the inner ribs 22b disposed on the wall surface in the lateral direction is greater than the number of the outer ribs 22a and the inner ribs 22b disposed on the wall surface in the vertical direction. This configuration realizes more effective improvements to the strength while constraining an increase in weight.

In the present embodiment, the inner ribs 22b are configured so that the inner ribs 22b are provided only on the inner circumferential surface of the transition section 13. However, the inner ribs 22b may also be configured so that the inner ribs are provided on the inner circumferential surface of the gear case unit 14. That is, the inner ribs 22b may be configured so that the inner ribs 22b extend from the clutch housing unit 12 as far as the attachment flange unit 14b of the gear case unit 14, including the transition section 13, similar to the outer ribs 22a.

In the present embodiment, the inner ribs 22b are configured so that the inner ribs 22b are disposed at respective positions in the circumferential direction corresponding to all of the outer ribs 22b. However, a configuration in which the inner ribs 22b are disposed at positions in the circumferential direction corresponding to some of the outer ribs 22a is also able to provide the improvements to the strength of the transmission case 10.

In the present embodiment, the annular ribs 24 are configured so that the annular ribs 24 are provided only on the outer circumferential surface of the transmission case 10. However, the annular ribs 24 may also be configured so that annular ribs 24 are provided on the inner circumferential surface of the transmission case 10. In such circumstances, the annular ribs 24 provided on the inner circumferential surface may be configured to extend across the entire circumferential direction of the transition section 13 and the gear case unit 14, and each of the plurality of inner ribs 22b may be also configured to be connected in the circumferential direction.

Also, the annular ribs 24 provided on the inner circumferential surface are preferably disposed in correspondence with the positions where the annular ribs 24 provided on the outer circumferential surface are disposed in the longitudinal direction. According to this configuration, not only the outer ribs 22a and the inner ribs 22b but also the annular ribs 24 are configured as integral ribs passing through the inside and outside of the transmission case 10. As such, a further level of improvement to the strength of the transmission case 10 may be provided.

The present embodiment is configured so that the number of the outer ribs 22a disposed on the wall surface in the lateral direction of the transmission case 10 is greater than the number of the outer ribs 22a disposed on the wall surface in the vertical direction of the transmission case 10. However, no such limitation is intended. A configuration in which the transmission case 10 has the outer ribs 22a provided in greater number on the wall surface in the direction that is weaker with respect to the bending input is preferable. For example, in a configuration opposite to that of the present embodiment in that the width of the wall surface in the vertical direction of the transmission case 10 is smaller than the width of the wall surface in the lateral direction of the transmission case 10, the configuration may be such that the arrangement of the outer ribs 22a is the opposite of that of the present embodiment, such that the number of the outer ribs 22a disposed on the wall surface in the vertical direction of the transmission case 10 is greater than the number of the outer ribs 22a disposed on the wall surface in the lateral direction of the transmission case 10. Also, the configuration may be such that the same number of the outer ribs 22a is disposed on the wall surface in the direction that is weaker with respect to the bending input and on the wall surface in another direction.

The configuration of the present embodiment is applicable to a manual transmission for a so called front engine rear drive (FR) type vehicle where the transmission is mounted in the FR vehicle with the engine being disposed vertically (in terms of the vehicle longitudinal direction). However, no such limitation is intended. For example, the configuration may be applicable to a manual transmission for a so called front engine front drive (FF) type vehicle where the transmission is mounted in the FF vehicle with the engine being disposed laterally (in terms of the vehicle lateral direction).

### Reference Signs List

- 1: Transmission
- 2: Input shaft
- 4: Countershaft
- 6: Output shaft
- 8: Transmission mechanism
- 10: Transmission case
- 12: Clutch housing unit
- 12a: Attachment flange unit
- 13: Transition section
- 14: Gear case unit
- 14b: Attachment flange unit
- 16: Extension case unit
- 16a: Insertion through hole
- 18: Adapter plate
- 22a: Outer rib (outer protrusion)
- 22b: Inner rib (inner protrusion)
- 24: Annular rib (intersecting protrusion)
- 30: Propeller shaft
- B1: Ball bearing
- B2: Ball bearing
- RG: Reduction drive gear
- RB1: Roller bearing
- RB2: Roller bearing
- RG': Reduction driven gear
- PB: Pilot bearing
- G: Drive gear
- RevG: Reverse drive gear
- G': Driven gear
- RevIG: Idler reverse gear
- RevG': Reverse driven gear
- S: Synchronizer
- LA: Major axis
- SA: Minor axis
- BS: Bushing

## Claims

1. A transmission case (10) having a case body (14) and a housing unit (12), the housing unit (12) being integrated with the case body (14) and including a transition section (13) connected to the case body (14), the transmission case (10) having a longitudinal axis along which the case body (14) and the housing unit (12) are arranged, wherein
the case body (14) accommodates a transmission mechanism to transmit a drive force from a motor to an output shaft (6) by a variable gear ratio and;
the housing unit (12) accommodates a coupling mechanism connected to the motor and to transmit the drive force from the motor to the transmission mechanism; wherein
a plurality of outer protrusions (22a) are formed on the outer surface of at least the case body (14) and the transition section (13) to protrude outward, and having a longitudinal dimension along the longitudinal axis of the transmission case (10); and **characterised by**
a plurality of inner protrusions (22b) formed at respective positions on the inner surface of the transmission case (10) to protrude inward, and having a longitudinal dimension along the longitudinal axis of the transmission case (10), the plurality of inner protrusions (22b) being positioned corresponding to at least some of the outer protrusions (22a).

2. The transmission case (10) according to claim 1, further comprising
at least one or a plurality of intersecting protrusions (24) disposed on the outer and/or inner surface of at least the transition section (13), and each intersecting protrusion (24) intersecting at least one of the plurality of outer protrusions (22a) and/or at least one of the plurality of inner protrusions (22b).

3. The transmission case (10) according to claim 2, wherein
each intersecting protrusion (24) extends along the circumferential direction of the transmission case (10) to form an annular shape.

4. The transmission case (10) according to claim 1, 2 or 3, wherein
the case body (14) has an ellipse-like-shaped cross-section perpendicular to the longitudinal axis of the transmission case (10).

5. The transmission case (10) according to claim 4, wherein
the plurality of outer protrusions (22a) and/or the plurality of inner protrusions (22b) are formed such that the concentration of the number of the plurality of outer protrusions (22a) and/or the plurality of inner protrusions (22b) per a unit of length along the circumferential direction of the transmission case (10) varies to reinforce the wall of transmission case (10) against bending force applied thereto.

6. The transmission case (10) according to claim 4 or 5, wherein
the plurality of outer protrusions (22a) and/or the plurality of inner protrusions (22b) are formed such that the concentration of the number thereof increases from a first point to the second point on a line along the circumferential direction of the transmission case (10),
the first point being a point at which the outer surface of the transmission case (10) intersects with the major axis of the ellipse-like-shaped cross-section, and
the second point being a point at which the outer surface of the transmission case (10) intersects with the minor axis of the ellipse-like-shaped cross-section.

7. The transmission case (10) according to any one of claims 1 to 6,
wherein at least some of the plurality of outer protrusions (22a) extend across the entire case body (14) and housing unit (12) with respect to a direction along the longitudinal axis.

8. The transmission case (10) according to any one of claims 1 to 7,
wherein all of the plurality of outer protrusions (22a) extends across the entire case body (14) and housing unit (12) with respect to a direction along the longitudinal axis.

9. The transmission case (10) according to any one of claims 1 to 8,
wherein each of the plurality of inner protrusions (22b) is disposed at the respective positions corresponding to each of the plurality of outer protrusions (22a) with respect to the circumferential direction of the transmission case (10).

10. The transmission case (10) according to claim 2 to 9,
wherein all of the at least one or the plurality of intersecting protrusions (24) intersects with at least one of the plurality of outer protrusions (22a).

11. The transmission case (10) according to any one of claims 2 to 10,
wherein the plurality of intersecting protrusions (24) is disposed along a direction of the longitudinal axis.

12. The transmission case (10) according to any one of claims 2 to 11,
wherein the plurality of intersecting protrusions (24) is disposed on the outer and/or inner surface of the transition section (13) and the case body (14).

13. A transmission, comprising:
the transmission case (10) according to any one of claims 1 to 12,
an input shaft (2) accommodated in the housing unit (12); and
the output shaft (6) accommodated in the case body (14) and configured to output a drive force input to the input shaft (2);
wherein the transmission mechanism accommodated in the case body (14) configured to transmit the drive force input to the input shaft (2) to the output shaft (6) by a variable gear ratio.

## Patentansprüche

1. Getriebegehäuse (10) mit einem Gehäusekörper (14) und einer Gehäuseeinheit (12), wobei die Gehäuseeinheit (12) mit dem Gehäusekörper (14) zusammengefasst ist und einen Übergangsabschnitt (13) umfasst, der mit dem Gehäusekörper (14) verbunden ist, wobei das Getriebegehäuse (10) eine Längsachse aufweist, längs derer der Gehäusekörper (14) und die Gehäuseeinheit (12) angeordnet sind, wobei der Gehäusekörper (14) einen Getriebemechanismus beherbergt, um eine Antriebskraft von einem Motor durch ein variables Übersetzungsverhältnis zu einer Ausgangswelle (6) zu übertragen; und
die Gehäuseeinheit (12) einen Kupplungsmechanismus beherbergt, der mit dem Motor verbunden ist und die Antriebskraft vom Motor auf den Getriebemechanismus übertragen soll; wobei
mehrere äußere Vorsprünge (22a) an der Außenfläche von mindestens dem Gehäusekörper (14) und dem Übergangsabschnitt (13) so ausgebildet sind, dass sie nach außen vorstehen, und eine Längsabmessung längs der Längsachse des Getriebegehäuses (10) aufweisen; **gekennzeichnet durch**
mehrere innere Vorsprünge (22b), die an jeweiligen Positionen auf der Innenfläche des Getriebegehäuses (10) so ausgebildet sind, dass sie nach innen vorstehen, und eine Längsabmessung längs der Längsachse des Getriebegehäuses (10) aufweisen, wobei die mehreren inneren Vorsprünge (22b) entsprechend zu mindestens einigen der äußeren Vorsprünge (22a) angeordnet sind.

2. Getriebegehäuse (10) nach Anspruch 1, das ferner mindestens einen oder mehrere sich überschneidende Vorsprünge (24) aufweist, die an der Außen- und/oder Innenfläche von mindestens dem Übergangsabschnitt (13) angeordnet sind, und wobei sich jeder sich überschneidende Vorsprung (24) sich mit mindestens einem der mehreren äußeren Vorsprünge (22a) und/oder mindestens einem der mehreren inneren Vorsprünge (22b) überschneidet.

3. Getriebegehäuse (10) nach Anspruch 2, wobei
sich jeder sich überschneidende Vorsprung (24) längs der Umfangsrichtung des Getriebegehäuses (10) erstreckt, so dass er eine Ringform bildet.

4. Getriebegehäuse (10) nach Anspruch 1, 2 oder 3,
wobei der Gehäusekörper (14) senkrecht zur Längsachse des Getriebegehäuses (10) einen ellipsenähnlich geformten Querschnitt aufweist.

5. Getriebegehäuse (10) nach Anspruch 4, wobei
die mehreren äußeren Vorsprünge (22a) und/oder die mehreren inneren Vorsprünge (22b) so ausgebildet sind, dass die Anhäufung der Anzahl der mehreren äußeren Vorsprünge (22a) und/oder der mehreren inneren Vorsprünge (22b) pro Längeneinheit längs der Umfangsrichtung des Getriebegehäuses (10) variiert, um die Wand des Getriebegehäuses (10) gegen eine darauf ausgeübte Biegekraft zu verstärken.

6. Getriebegehäuse (10) nach Anspruch 4 oder 5, wobei
die mehreren äußeren Vorsprünge (22a) und/oder die mehreren inneren Vorsprünge (22b) so ausgebildet sind, dass die Anhäufung ihrer Anzahl von einem ersten Punkt zum zweiten Punkt auf einer Linie längs der Umfangsrichtung des Getriebegehäuses (10) zunimmt,
wobei der erste Punkt ein Punkt ist, an dem sich die Außenfläche des Getriebegehäuses (10) mit der Hauptachse des ellipsenähnlich geformten Querschnitts schneidet, und wobei der zweite Punkt ein Punkt ist, an dem sich die Außenfläche des Getriebegehäuses (10) mit der Nebenachse des ellipsenähnlich geformten Querschnitts schneidet.

7. Getriebegehäuse (10) nach einem der Ansprüche 1 bis 6,
wobei sich mindestens einige der mehreren äußeren Vorsprünge (22a) bezüglich einer Richtung längs der Längsachse über den gesamten Gehäusekörper (14) und die Gehäuseeinheit (12) erstrecken.

8. Getriebegehäuse (10) nach einem der Ansprüche 1 bis 7,
wobei sich alle der mehreren äußeren Vorsprünge (22a) bezüglich einer Richtung längs der Längsachse über den gesamten Gehäusekörper (14) und die Gehäuseeinheit (12) erstrecken.

9. Getriebegehäuse (10) nach einem der Ansprüche 1 bis 8,
wobei jeder der mehreren inneren Vorsprünge (22b) an den jeweiligen Positionen angeordnet ist, die bezüglich der Umfangsrichtung des Getriebegehäuses (10) jedem der mehreren äußeren Vorsprünge (22a) entsprechen.

10. Getriebegehäuse (10) nach einem der Ansprüche 2 bis 9,
wobei sich alle des mindestens einen oder der mehreren sich überschneidenden Vorsprünge (24) mit mindestens einem der mehreren äußeren Vorsprünge (22a) überschneiden.

11. Getriebegehäuse (10) nach einem der Ansprüche 2 bis 10,
wobei die mehreren sich überschneidenden Vorsprünge (24) längs einer Richtung der Längsachse angeordnet sind.

12. Getriebegehäuse (10) nach einem der Ansprüche 2 bis 11,
wobei die mehreren sich überschneidenden Vorsprünge (24) an der Außen- und/oder Innenfläche des Übergangsabschnitts (13) und des Gehäusekörpers (14) angeordnet sind.

13. Getriebe, das aufweist:
das Getriebegehäuse (10) nach einem der Ansprüche 1 bis 12, eine Eingangswelle (2), die in der Gehäuseeinheit (12) untergebracht ist; und
die Ausgangswelle (6), die im Gehäusekörper (14) untergebracht ist und konfiguriert ist, eine Antriebskraft abzugeben, die der Eingangswelle (2) zugeführt wird;
wobei der im Gehäusekörper (14) untergebrachte Getriebemechanismus konfiguriert ist, die der Eingangswelle (2) zugeführte Antriebskraft durch ein variables Übersetzungsverhältnis zur Ausgangswelle (6) zu übertragen.

## Revendications

1. Carter de boîte de vitesses (10) ayant un corps de carter (14) et une unité de logement (12), ladite unité de logement (12) étant intégrée au corps de carter (14) et présentant une section de transition (13) raccordée au corps de carter (14), le carter de boîte de vitesses (10) ayant un axe longitudinal le long duquel sont agencés le corps de carter (14) et l'unité de logement (12),
le corps de carter (14) logeant un mécanisme de transmission destiné à transmettre une force d'entraînement d'un moteur à un arbre de sortie (6) avec un rapport de transmission variable, et
l'unité de logement (12) logeant un mécanisme d'accouplement relié au moteur et destiné à transmettre la force d'entraînement du moteur au mécanisme de transmission ;
une pluralité de nervures extérieures (22a) étant formée sur la surface extérieure au moins du corps de carter (14) et de la section de transition (13) et faisant saillie vers l'extérieur, et ayant une longueur s'étendant le long de l'axe longitudinal du carter de boîte de vitesses (10) ; **caractérisé**
**en ce qu'**une pluralité de nervures intérieures (22b) est formée à des emplacements respectifs sur la surface intérieure du carter de boîte de vitesses (10) et fait saillie vers l'intérieur, et a une longueur s'étendant le long de l'axe longitudinal du carter de boîte de vitesses (10), la pluralité de nervures intérieures (22b) étant disposée de manière à correspondre à au moins quelques-unes des nervures extérieures (22a).

2. Carter de boîte de vitesses (10) selon la revendication 1, comprenant en outre
une ou plusieurs nervures intersectantes (24) disposées sur la surface extérieure et/ou la surface intérieure au moins de la section de transition (13), chaque nervure intersectante (24) intersectant au moins une nervure de la pluralité de nervures extérieures (22a) et/ou au moins une nervure de la pluralité de nervures intérieures (22b).

3. Carter de boîte de vitesses (10) selon la revendication 2, où
chaque nervure intersectante (24) s'étend dans la direction circonférentielle du carter de boîte de vitesses (10) pour former un anneau.

4. Carter de boîte de vitesses (10) selon la revendication 1, 2 ou 3,
où le corps de carter (14) a une section transversale en forme d'ellipse perpendiculairement à l'axe longitudinal du carter de boîte de vitesses (10).

5. Carter de boîte de vitesses (10) selon la revendication 4, où
la pluralité de nervures extérieures (22a) et/ou la pluralité de nervures intérieures (22b) sont formées de telle manière que la concentration du nombre de nervures extérieures (22a) et/ou du nombre de nervures intérieures (22b) est variable par unité de longueur dans la direction circonférentielle du carter de boîte de vitesses (10), afin de renforcer la résistance du carter de boîte de vitesses (10) à une force de flexion exercée sur celui-ci.

6. Carter de boîte de vitesses (10) selon la revendication 4 ou la revendication 5, où
la pluralité de nervures extérieures (22a) et/ou la pluralité de nervures intérieures (22b) sont formées de telle manière que la concentration du nombre de celles-ci augmente d'un premier point à un deuxième point sur une ligne dans la direction circonférentielle du carter de boîte de vitesses (10),
le premier point étant un point où la surface extérieure du carter de boîte de vitesses (10) intersecte le grand axe de la section transversale en forme d'ellipse, et
le deuxième point étant un point où la surface extérieure du carter de boîte de vitesses (10) intersecte le petit axe de la section transversale en forme d'ellipse.

7. Carter de boîte de vitesses (10) selon l'une des revendications 1 à 6,
où au moins quelques nervures de la pluralité de nervures extérieures (22a) s'étendent sur l'ensemble du corps de carter (14) et de l'unité de logement (12) par rapport à une direction le long de l'axe longitudinal.

8. Carter de boîte de vitesses (10) selon l'une des revendications 1 à 7,
où toutes les nervures de la pluralité de nervures extérieures (22a) s'étendent sur l'ensemble du corps de carter (14) et de l'unité de logement (12) par rapport à une direction le long de l'axe longitudinal.

9. Carter de boîte de vitesses (10) selon l'une des revendications 1 à 8,
où chaque nervure de la pluralité de nervures intérieures (22b) est disposée à un emplacement respectif correspondant à chaque nervure de la pluralité de nervures extérieures (22a) par rapport à la direction circonférentielle du carter de boîte de vitesses (10).

10. Carter de boîte de vitesses (10) selon les revendications 2 à 9, où toutes les nervures des une ou plusieurs nervures intersectantes (24) intersectent au moins une nervure de la pluralité de nervures extérieures (22a).

11. Carter de boîte de vitesses (10) selon l'une des revendications 2 à 10, où la pluralité de nervures intersectantes (24) est disposée le long de l'axe longitudinal.

12. Carter de boîte de vitesses (10) selon l'une des revendications 2 à 11, où la pluralité de nervures intersectantes (24) est disposée sur la surface extérieure et/ou la surface intérieure de la section de transition (13) et du corps de carter (14).

13. Transmission, comprenant :
le carter de boîte de vitesses (10) selon l'une des revendications 1 à 12, un arbre d'entrée (2) logé dans l'unité de logement (12) ; et
l'arbre de sortie (6) logé dans le corps de carter (14) et prévu pour appliquer une entrée de force d'entraînement sur l'arbre d'entrée (2) ;
le mécanisme de transmission logé dans le corps de carter (14) étant prévu pour transmettre l'entrée de force d'entraînement de l'arbre d'entrée (2) à l'arbre de sortie (6) avec un rapport de transmission variable.
